# EUROPEAN PATENT APPLICATION

(11) **EP 3 434 167 A1**
(43) Date of publication of application: **30.01.2019**
(21) Application number: 18780471.1
(22) Date of filing: 20.03.2018
(51) Int. Cl.: A47L 13/51, A47L 25/00

(54) **CLEANING TOOL**

(30) Priority: 04.04.2017 JP 2017074547
(71) Applicant: Nitoms, Inc., Tokyo 1400002 (JP); Nitto Denko Corporation, Ibaraki-shi, Osaka 567-8680 (JP)
(72) Inventor: MIWA, Masami, Tokyo 140-0002 (JP); OMORI, Tsuneaki, Tokyo 140-0002 (JP)
(74) Representative: Müller-Boré & Partner Patentanwälte PartG mbB
(86) International application number: PCT/JP2018/011083
(87) International publication number: WO 2018/186170

(57) **Abstract**

Provided is a cleaner 1 that includes: a case 3 having a storage space 31S partially open to the outside and an inner surface facing the storage space 31S; and a cleaner body 2 capable of being stored in the storage space 31S of the case 3 while supporting an adhesive tape roll R, wherein the cleaner body 2 includes a shaft-shaped roll support 22 configured to rotatably support the adhesive tape roll R, the case 3 includes a cleaner body support 33 configured to support the cleaner body 2 so that the cleaner body 2 in a stored state is inclined relative to a perpendicular direction, and the cleaner body 2 is supported by the cleaner body support 33 to be inclined so that a distance between a virtual axis L3 along a direction in which a front side inner surface 31F that is positioned on a front side of the inner surface of the case 3 extends and a virtual axis L2 passing through a center of the roll support 22 is large on a side away from the open side of the storage space 31S and small on a side close to the open side thereof.

## Description

### CROSS-REFERENCE TO RELATED APPLICATION

This application claims priority to Japanese Patent Application No. 2017-074547, the disclosure of which is incorporated herein by reference in its entirety.

### FIELD

The present invention relates to a cleaner capable of removing dust or the like on a surface to be cleaned using adhesive force of an adhesive tape.

### BACKGROUND

Basically, the cleaner is configured to rotatably support an adhesive tape roll, and to be capable of removing dust on a surface to be cleaned by rolling an adhesive surface exposed around an outer circumference of the adhesive tape roll along the surface to be cleaned. There are conventionally various forms of cleaner of this kind. Examples of such a cleaner include an "adhesive cleaner" in Patent Literature 1. The cleaner in Patent Literature 1 is configured so that a rear end portion of its handle can be hung on a hook projecting from, for example, a wall.

### CITATION LIST

### Patent Literature

Patent Literature 1: JP 2002-315718 A

### SUMMARY

### Technical Problem

In order to further promote the cleaner of this kind, the applicants of the present application have proposed to make the cleaner contribute to establishing a comfortable environment in such a way that such a cleaner is kept available at the entrance of a house and the household members use the cleaner frequently when they, for example, go out or come home to, for example, keep allergic substances (e.g., pollen) out of the house.

However, the cleaner in Patent Literature 1, for example, is configured to be capable of being hung on a wall or the like as aforementioned, but is poor-looking with the adhesive tape roll left exposed. Use of the cleaner may also involve a delicate work, which may be difficult to be made particularly for children and elderly people, such as when the cleaner is taken off the hook at the time of being used, and rehung on the hook after being used. Thus, the conventional cleaner fails to optimally satisfy the aforementioned proposal by the applicants of the present application, particularly in terms of its usability.

It is therefore an object of the present invention to provide a cleaner with favorable usability.

### Solution to Problem

The cleaner of the present invention includes: a case having a storage space partially open to the outside and an inner surface facing the storage space; and a cleaner body capable of being stored in the storage space of the case while supporting an adhesive tape roll, wherein the cleaner body includes a shaft-shaped roll support configured to rotatably support the adhesive tape roll, the case includes a cleaner body support configured to support the cleaner body so that the cleaner body in a stored state is inclined relative to a perpendicular direction, and the cleaner body is supported by the cleaner body support to be inclined so that a distance between a virtual axis along a direction in which a front side inner surface that is positioned on a front side of the inner surface of the case extends and a virtual axis passing through a center of the roll support is large on a side away from the open side of the storage space and small on a side close to the open side thereof.

The configuration can be such that the case includes, on its rear side, a mounting part capable of being mounted to a mounting object, and while the mounting part is kept mounted to the mounting object, the supporting by the cleaner body support is achieved so that the cleaner body is inclined with its proximal end positioned more on a front side of the case than its distal end.

An angle between the axis in the front side inner surface of the case and the axis in the roll support can be 1 to 7 degrees.

An angle between the axis in the front side inner surface of the case and the axis in the roll support can be 1 to 4 degrees.

The configuration can be such that the cleaner body support is provided at a portion away from the open side of the storage space of the case, and restricts a distal end of the roll support from moving at least forward and backward.

The cleaner body support comes into contact with a part of the cleaner body while being kept inclined thereto when the cleaner body is stored in the case, so that the cleaner body can be guided to a supporting position.

The cleaner body support can be a recess provided at a portion away from the open side of the storage space of the case and having a curved inner surface.

The roll support can include, at its distal end, a projection configured to come into contact with the recess.

The configuration can be such that the recess has a through hole substantially at its center, and the projection is fitted into the through hole when in the stored state.

A roll contacting projection configured to come into contact with the adhesive tape roll can be formed on the front side inner surface of the case.

### BRIEF DESCRIPTION OF DRAWINGS

Fig. 1 is a perspective view showing a cleaner (in a stored state) according to one embodiment of the present invention.
Fig. 2 is a view showing the cleaner (in the stored state) with a longitudinal cross section of a case.
Fig. 3 is a perspective view showing a cleaner body according to one embodiment of the present invention.
Fig. 4 is a front view showing the cleaner body.
Fig. 5 is a plan view showing the cleaner body.
Fig. 6 is a bottom view showing the cleaner body.
Fig. 7 is a right side view showing the cleaner body.
Fig. 8 is a left side view showing the cleaner body.
Fig. 9 is a perspective view showing a case according to one embodiment of the present invention.
Fig. 10 is a left side view showing a case according to one embodiment of the present invention.
Fig. 11 is a plan view showing the case (the front side thereof shown on the right side).
Fig. 12 is a bottom view showing the case (the front side thereof shown on the right side).
Fig. 13 is a front view showing the case.
Fig. 14 is a rear view showing the case.
Fig. 15 is an enlarged end view of the case as viewed from the arrow A-A in Fig. 13.
Fig. 16A is a perspective view showing the front side of a mounting part according to one embodiment of the present invention.
Fig. 16B is a perspective view showing the rear side of a mounting part according to one embodiment of the present invention.
Fig. 17 is a view showing a cleaner (in the stored state) according to a modified embodiment of the present invention, with a longitudinal cross section of a case.
Fig. 18 is a perspective view showing a cleaner body according to a modified embodiment of the present invention.
Fig. 19 is a front view showing the cleaner body.
Fig. 20 is a plan view showing the cleaner body.
Fig. 21 is a right side view showing the cleaner body.
Fig. 22 is a left side view showing the cleaner body.
Fig. 23 is a plan view showing a case according to a modified embodiment of the present invention (the front side thereof shown on the right side).
Fig. 24 is a bottom view showing the case (the front side thereof shown on the right side).
Fig. 25 is a rear view showing the case.
Fig. 26 is an enlarged end view of the case as viewed from the arrow B-B in Fig. 23.

### DESCRIPTION OF EMBODIMENTS

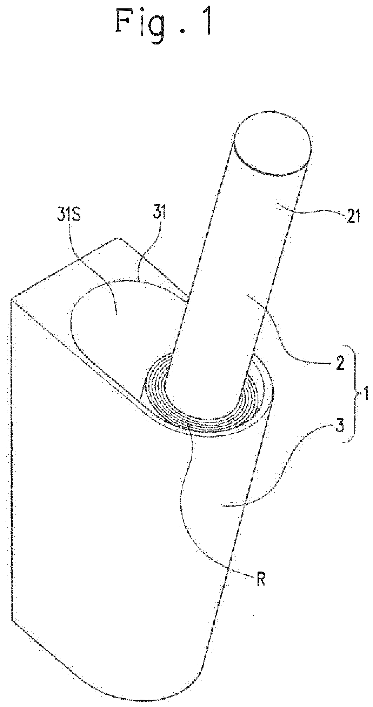

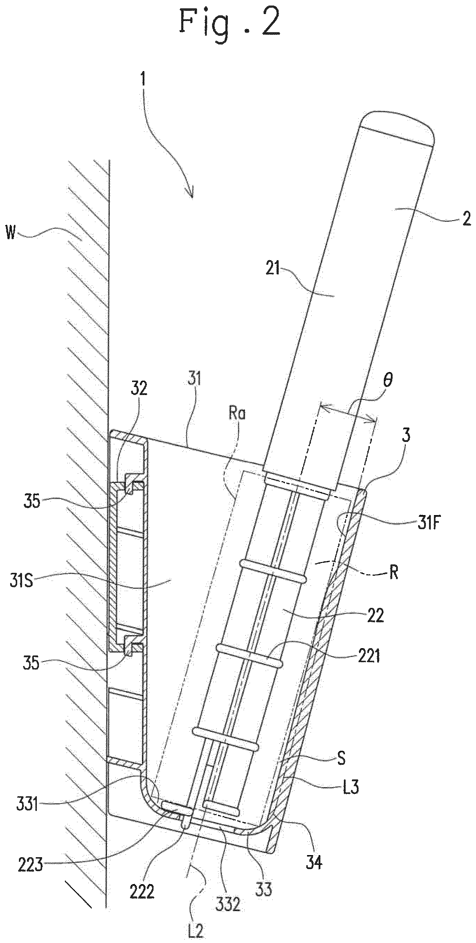

The present invention will be hereinafter described by taking one embodiment. A cleaner 1 of this embodiment is constituted by a combination of a cleaner body 2 including a cylindrical adhesive tape roll R (shown by the two-dot chain line in Fig. 2), and a case 3 configured to store the cleaner body 2. The appearance of the cleaner 1 in the stored state is as shown in Fig. 1. Hereinafter, a description will be given on the state where the case 3 is mounted to a vertical surface (e.g., a wall surface) that is a mounting object W to allow the cleaner body 2 to be taken out of and put into the case 3 from above. Note, however, that the state where the case 3 is mounted to the mounting object W is not limited thereto.

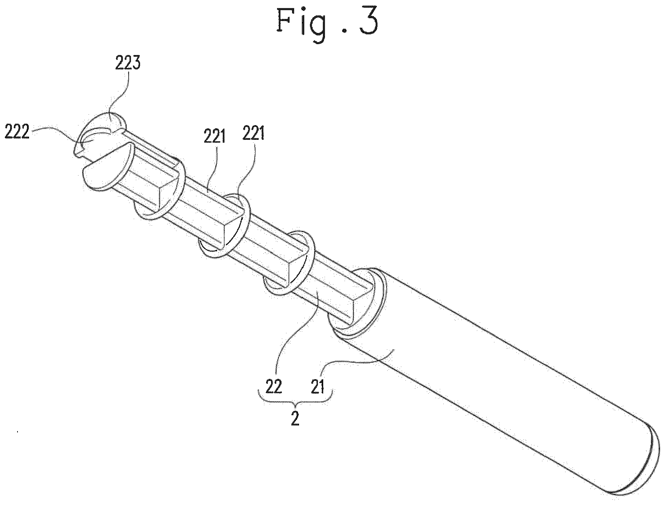

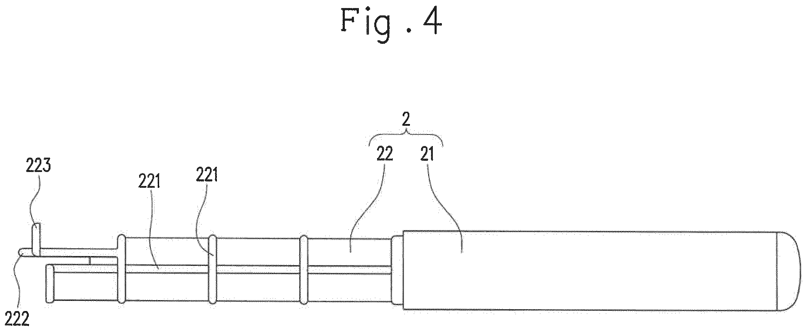

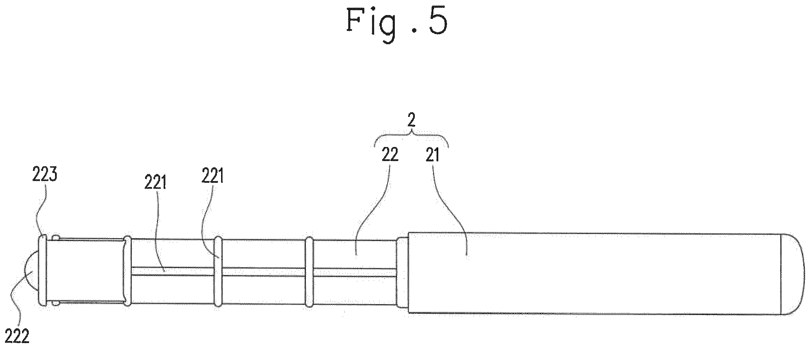

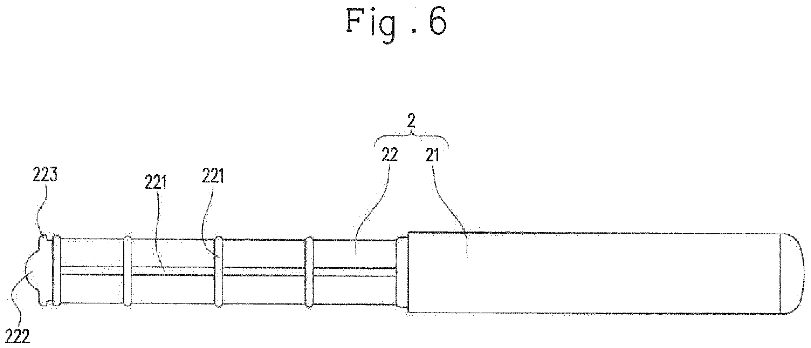

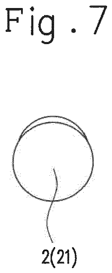

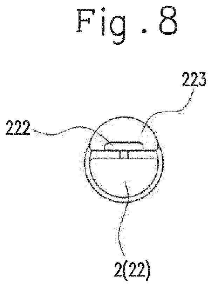

The cleaner body 2 alone is shown in Fig. 3 to Fig. 8, and integrally includes a handle 21 on its proximal end side and a roll support 22 on its distal end side. Note that a rear view of the cleaner body 2 is symmetrical with the front view (Fig. 4), and thus not attached hereto. The handle 21 is a portion to be grasped by a user's hand when the cleaner body 2 is used. The roll support 22 is a shaft-shaped portion configured to rotatably support the adhesive tape roll R, and has a cruciform transverse cross section. The roll support 22 has ridges 221 that are formed on its surface and come into substantially line contact with the inner surface of the adhesive tape roll R. The ridges 221 are constituted by the outer edges of the cruciform portions extending in the axial direction and the outer edges of circular plate portions provided intermittently in the axial direction. The ridges 221 can reduce the area of contact with the inner surface of the adhesive tape roll R, and thereby allow the adhesive tape roll R to rotate lightly when the cleaner body 2 is used. The distal end of the roll support 22 has a semicircular plate-shaped projection 222 (which will be described later). The projection 222 is formed in a curved shape with no angular end edges in plan view and in lateral view. The proximal end of the projection 222 has a semicircular stopper 223 extending in the radial direction. The stopper 223 is configured to come into contact with the adhesive tape roll R and thereby prevent the adhesive tape roll R from falling from the roll support 22.

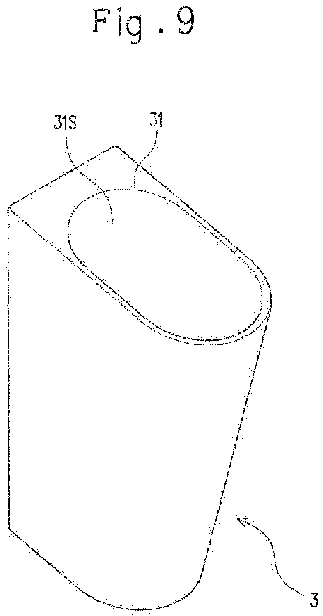

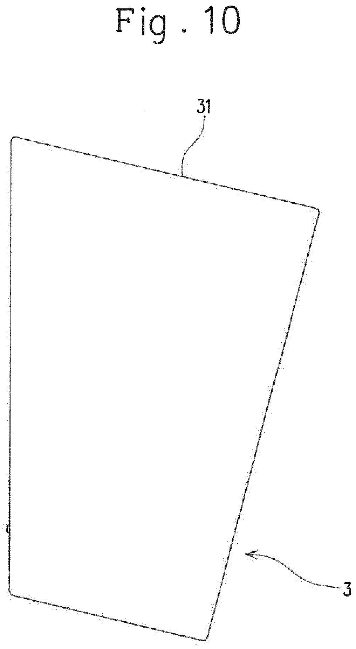

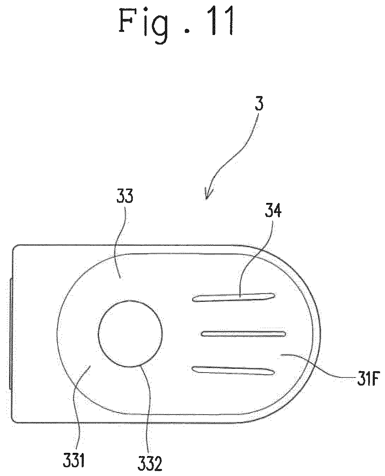

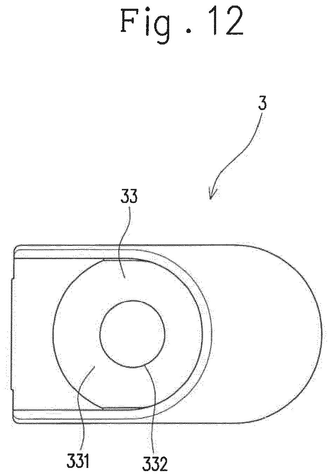

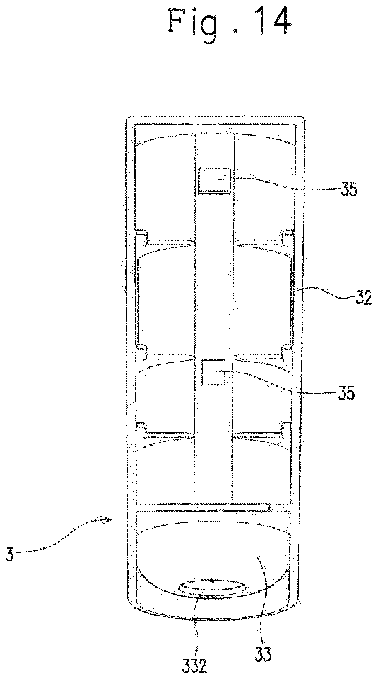

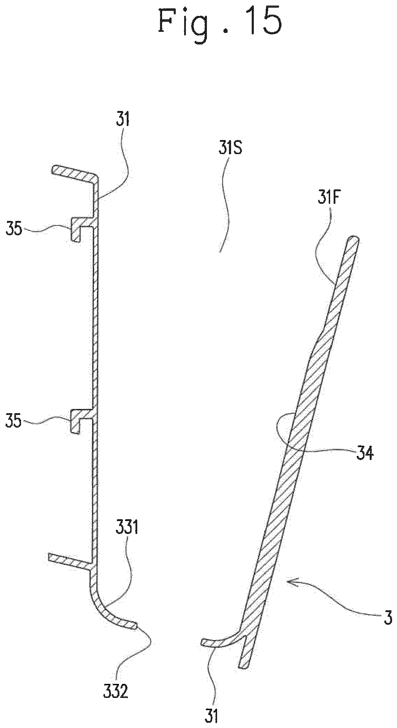

The case 3 alone is shown in Fig. 9 to Fig. 15, and integrally includes the handle 21 on its proximal end side and the roll support 22 on its distal end side. Note that a right side view of the case 3 is symmetrical with the left side view (Fig. 10), and thus not attached hereto. The case 3 has an external form having a substantially D-shape in transverse cross section, right and left sides having flat surfaces, a front side having an outwardly convex surface, and a rear side having such a shape as to have its outer edges partially lying on the same plane (note that the rear side has projections and recesses for forming a mounting part 32, which will be described later). In this embodiment, the curvature of the convex surface is constant between the upper and lower portions. The longitudinal cross section of the case 3 has a trapezoidal shape with the lower portion being gradually narrowed.

The case 3 includes a storage part 31 configured to store the roll support 22 of the cleaner body 2. The storage part 31 has a storage space 31S partially open to the outside. The inner surface of the storage part 31 faces the storage space 31S. The transverse cross section of the storage part 31 has an elliptical shape with the long diameter direction being the front and rear direction. The elliptical shape along the front side and the forward portions of the lateral sides of the case 3 is a shape scaled down at a specific ratio from the outer shape of the case 3. The longitudinal cross section of the storage part 31 has also a trapezoidal shape with the lower portion being gradually narrowed, similar to that of the outer shape of the case 3. The bottom portion (lower portion) away from the open side of the storage space 31S of the storage part 31 has a cleaner body support (which will be described later).

In the state where the case 3 is mounted to the vertical surface (e.g., the wall surface) that is the mounting object W, one end (the upper end) of the storage space 31S is an open end. The cleaner body 2 is stored in the storage space 31S while rotatably supporting the adhesive tape roll R. The cleaner body 2 can be taken out of and put into the storage space 31S of the case 3 from its open end.

When storing the cleaner body 2 in the case 3, the user only needs to put the cleaner body 2 into the storage part 31 (storage space 31S). Thus, the user does not need to do a work that seems delicate particularly for children and elderly people, such as a work that involves hanging a part of the handle of the conventional cleaner onto a hook. Further, the user only needs to grasp the handle 21 to take the cleaner body 2 out of the case 3 since the cleaner body 2 is not in a fixed state, such as in fitting engagement, with the storage part 31. Due to the ease of taking out of and putting into the case 3, the cleaner 1 of this embodiment is optimal for the usages the applicants of the present application have proposed, such as the usage in which the cleaner 1 is kept available at the entrance of a house and the household members use the cleaner 1 frequently when they, for example, go out or come home.

As shown in Fig. 2, the case 3 includes, on its rear side, the mounting part 32 configured to be capable of being mounted to the mounting object W. The mounting part 32 can include a device having an adhesive force or an adsorption force to the mounting object W, such as a double-sided tape, a sucker, or a permanent magnet. The mounting part 32 can also be a through hole through which a fastening device such as a screw can pass, or a projection such as a hook capable of being hung on the mounting object W. As described above, the form of the mounting part 32 is not limited to the specific form but can be various forms.

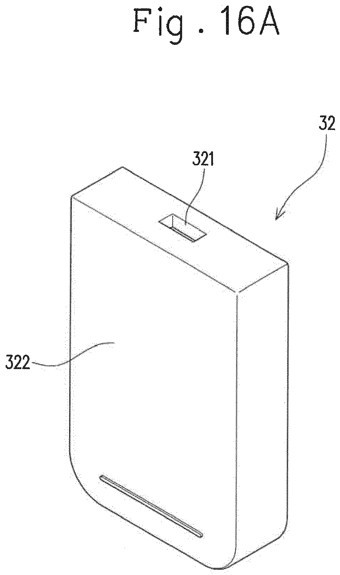

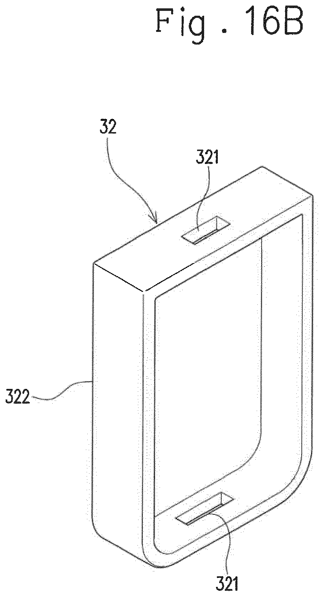

The mounting part 32 of this embodiment is formed into a box shape shown in Fig. 16A and Fig. 16B. The mounting part 32 can have holes 321 configured to be mountable to hooks 35 provided on the rear side of the case 3. A mounting part rear surface 322 can have a double-sided tape.

A plurality of mounting parts 32 having different mounting devices can also be provided replaceably as appropriate on the rear side of the case 3. These mounting parts flexibly adapt to each of, for example, the mounting object W made of a magnetic material such as steel, the mounting object W made of a non-magnetic material such as resin, and the mounting object W having projections and recesses, and thereby allow the case 3 to be securely mounted to the mounting object W.

The case 3 includes a cleaner body support 33. The cleaner body support 33 of this embodiment is provided at the bottom portion of the case 3.

The case 3 is configured to support the cleaner body 2 so that the cleaner body 2 in the stored state is inclined relative to the perpendicular direction. In this embodiment, the cleaner body 2 is supported by the case 3 so that the handle 21 of the cleaner body 2 is positioned upward while the roll support 22 thereof is positioned downward. While the mounting part 32 is kept mounted to the mounting object W, the supporting of the cleaner body 2 by the cleaner body support 33 is achieved so that the cleaner body 2 is inclined with its proximal end positioned more on the front side of the case 3 than its distal end. That is, the cleaner body 2 is supported so as to be inclined forward when viewed from the front side of the case 3. The cleaner body 2 inclined forward and stored in the case 3 as aforementioned enables the user to easily grasp the handle 21. Thus, the user can easily pick up the cleaner body 2.

The cleaner body 2 is inclined and supported by the cleaner body support 33 so that the distance between a virtual axis L3 along a direction in which the front side inner surface of the case 3 extends (obliquely upward direction) and a virtual axis L2 passing through at least the center of the roll support 22 of the cleaner body 2 is large on the lower side (i.e., the side away from the open side of the storage space 31S of the case 3) and small on the upper side (i.e., the open side of the storage space 31S). The cleaner body 2 being inclined and supported so that the distance is large on the lower side and small on the upper side, as aforementioned, can provide a space S on the lower side between the adhesive tape roll R and the front side inner surface of the case 3 even if an adhesive surface Ra of the adhesive tape roll R comes into contact with the front side inner surface of the case 3 on the upper side. That is, the adhesive force of the adhesive surface Ra exposed around the outer circumference of the adhesive tape roll R is exerted only on the upper portion of the case 3. This can prevent entire (continuous from the upper portion to the lower portion) adhesive contact between the adhesive tape roll R and the front side inner surface of the case 3. Accordingly, the adhesive force of the adhesive surface Ra does not act so strongly that it blocks the cleaner body 2 from being taken out of the case 3. Thus, the user does not feel inconvenient or uncomfortable when taking the cleaner body 2 out of the case 3.

In a front side inner surface 31F in the storage part 31, a roll contacting projection 34 configured to come into contact with the adhesive tape roll R is formed to project to the storage space 31S. In this embodiment, the roll contacting projection 34 is formed as a plurality of ribs extending in the vertical direction. The roll contacting projections 34 come into contact with the adhesive tape roll R in the stored state. Thus, not entire contact but partial contact is achieved between the storage part 31 and the adhesive tape roll R. Therefore, the adhesive force is less likely to block the cleaner body 2 from being taken out. Note that the roll contacting projections 34 are not essential to the present invention, and can be omitted.

An angle θ between the axis L3 in the direction in which the front side inner surface 31F of the case 3 extends and the axis L2 through the roll support 22 is 1 degree to 7 degrees, preferably 1 degree to 4 degrees. Setting such an angle between the axes L2 and L3 enables the user to more easily grasp the handle 21 than the case where a different angle is set. This further facilitates taking the cleaner body 2 out of the case 3. In order to maintain the setting of the angle θ, the extending direction of the projecting ends of the roll contacting projections 34 in the storage space 31S is set to be parallel to the extending direction of the front side inner surface 31F of the case 3. The upper end portions of the roll contacting projections 34 in this embodiment are formed into a round shape being gradually close to the front side inner surface 31F. With this configuration, the cleaner body 2 particularly when being stored in the case 3 is less likely to be caught by the upper end portions of the roll contacting projections 34.

In addition to setting in a parallel direction in this embodiment, the extending direction of the projecting ends of the roll contacting projections 34 in the storage space 31S can be set so that the projection amount of the roll contacting projections 34 from the front side inner surface 31F is smaller toward the lower side. This configuration can securely achieve the relationship in which the setting of the angle θ can be maintained and the space S can be provided on the lower side between the adhesive tape roll R and the front side inner surface of the case 3 even if the adhesive surface Ra of the adhesive tape roll R comes into contact with the front side inner surface of the case 3 on the upper side, as aforementioned.

In contrast to the above, the extending direction of the projecting ends of the roll contacting projections 34 in the storage space 31S can also be set so that the projection amount of the roll contacting projections 34 from the front side inner surface 31F is larger toward the lower side. In the case where the end edges of the roll contacting projections 34 that face the storage space 31S are in a linear shape, the storage part 31 is entirely in contact with the adhesive tape roll R, which reduces the superiority regarding the adhesive force. However, such an entire contact can exhibit an advantage of stabilizing the storage position of the cleaner body 2.

Next, the cleaner body support 33 provided on the case 3 will be described. The cleaner body support 33 is configured to restrict the distal end of the roll support 22 from moving at least forward and backward. With the cleaner body support 33, the supporting angle of the cleaner body support 33 in the stored state is maintained.

The cleaner body support 33 comes into contact with a part of the cleaner body 2 while being kept inclined thereto when the cleaner body 2 is stored in the case 3, so that the cleaner body 2 is guided to the supporting position at which the cleaner body 2 is stably stored. The guiding is achieved by gravity applied to the cleaner body 2. The "contact while being kept inclined" refers to the state where the axial direction of the roll support 22 of the cleaner body 2 and the contacting surface of the cleaner body support 33 (or the virtual tangent plane at the contacting point in the case where the contacting surface is a curved surface) are inclined relative to each other. The contact while being kept inclined can cause the cleaner body 2 to generate a force to move itself to the supporting position.

The guiding is achieved not only by the cleaner body support 33 but also by the configuration that the storage part 31 has an elliptical shape in transverse cross section. That is, the movement of the roll support 22 is restricted in the short diameter direction of the elliptical shape that has a small dimensional margin relative to that of the outer diameter of the adhesive tape roll R. In the long diameter direction of the elliptical shape, the storage space 31S expands forward on the upper side and has a downward narrowed shape that is gradually narrowed toward the lower side. Such a change in the shape of the storage part 31 in the long diameter direction also causes the cleaner body 2 to be inclined forward, and thereby securely achieves the guiding to the stored state.

The cleaner body support 33 in this embodiment is a recess that is provided at the bottom portion of the case 3 and has a curved inner surface 331. When the cleaner body 2 is to be stored in the case 3, the distal end of the roll support 22 comes into contact with the inner surface 331 of the recess, and is thereby guided to the lowermost portion of the recess. Further, the roll support 22 has the projection 222 at its distal end, and the projection 222 comes into contact with the recess of the cleaner body support 33 (i.e., the inner surface 331). The combination of the projection 222 and the recess having the inner surface 331 enables smoother guiding of the cleaner body 2 to the supporting position. In addition, the projection 222 has a semicircular plate shape in this embodiment, which enables stable contact between the projection 222 and the recess. Thus, the aforementioned guiding is further smoothly performed.

The recess of this embodiment further has a through hole 332 at substantially the center and at the lowermost portion. The semicircular plate-shaped projection 222 of the roll support 22 is formed to have a diameter smaller than the diameter of the through hole. With this configuration, the projection 222 is fitted into the through hole in the stored state. Thus, as aforementioned, the distal end of the roll support 22 is securely restricted from moving at least forward and backward. As a result, the cleaner body 2 is stably supported.

One embodiment of the present invention has been described as above. However, the present invention is not limited to the aforementioned embodiment, but various modifications can be made without departing from the gist of the present invention.

For example, the shapes of the cleaner body 2 and the case 3 are not limited to the shapes in the aforementioned embodiment, but can be modified into various shapes.

The case 3 can be mounted to the vertical surface such as the wall surface, as in the aforementioned embodiment, or can be mounted to a horizontal surface such as the top surface of, for example, a shoe cabinet. The case 3 can be simply placed on the upper surface of the mounting object W without being mounted thereto. The case 3 can also be mounted to a surface facing downward, such as a ceiling surface, or a surface facing another direction. In short, the case 3 may be mounted to the mounting object W so that the cleaner body 2 is inclined relative to the mounting object W.

In the aforementioned embodiment, the transverse cross section of the inner surface of the storage part 31 has an elliptical shape with the long diameter extending forward and backward. The shape of the storage part 31 is not limited thereto, but can have various shapes such as a perfect circle, an oval, or a polygon. The aforementioned embodiment has been described by taking, for example, the case where the elliptical shape along the front side and the forward portions of the lateral sides of the case 3 is a shape scaled down at a specific ratio from the outer shape of the case 3, without limitation thereto. For example, the storage part 31 can have a shape having no relation to the outer shape of the case 3.

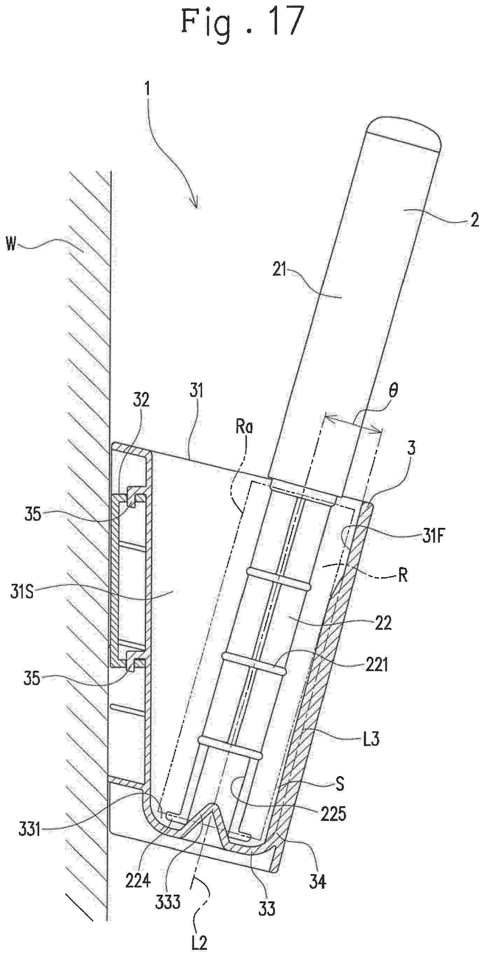

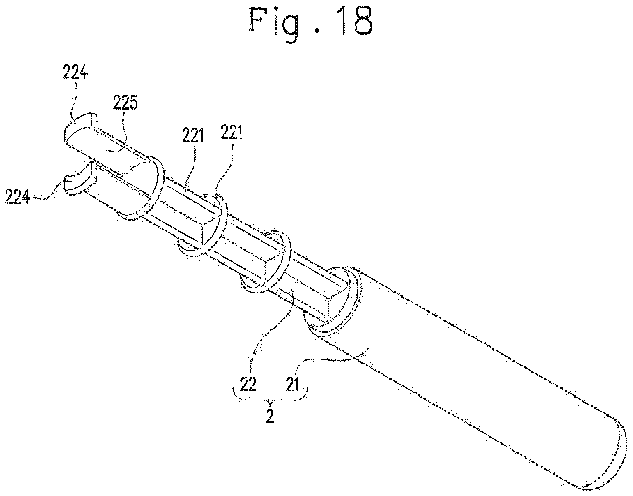

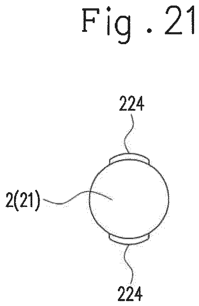

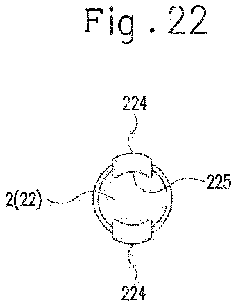

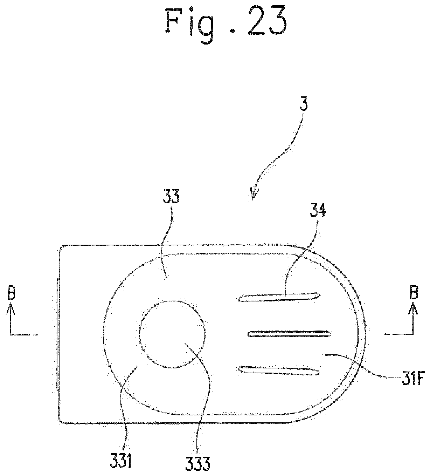

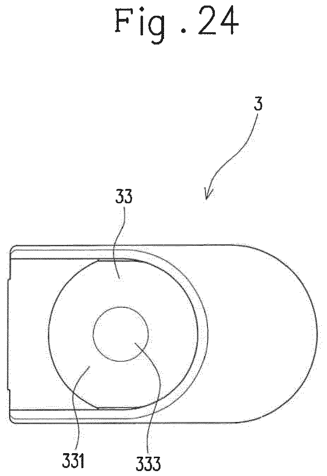

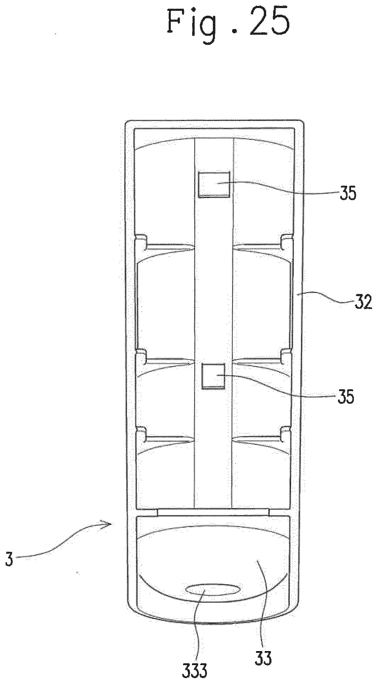

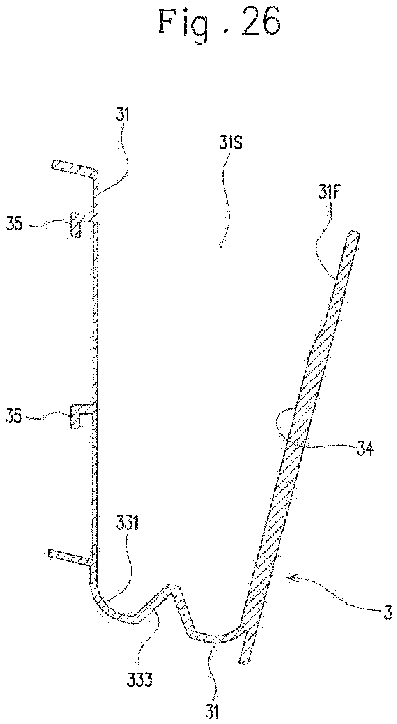

The aforementioned embodiment has been described by taking, for example, the combination of the recess as the cleaner body support 33 provided in the case 3 and the projection 222 as the projection provided in the cleaner body 2, as shown in Fig. 2 and the like. However, the relationship between "the recess and the projection" can be opposite. That is, as in the shapes respectively shown in Fig. 17 to Fig. 26, the configuration can be such that a recess (projection receiving part 225) is provided in the cleaner body 2 and a projection (projecting part 333) is provided in the case 3 to guide the cleaner body 2 to the supporting position, similar to the aforementioned embodiment.

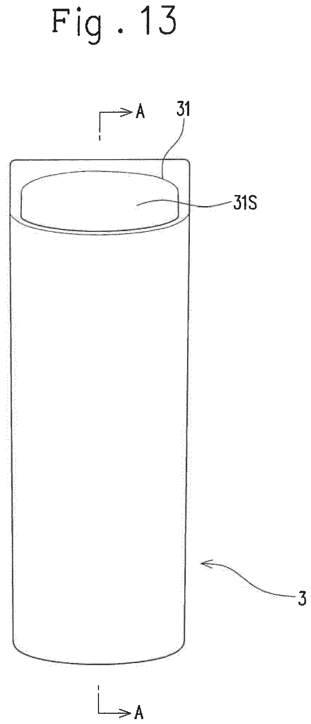

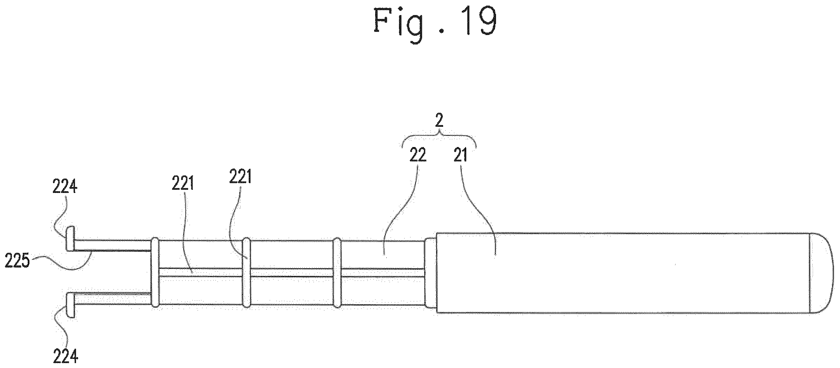

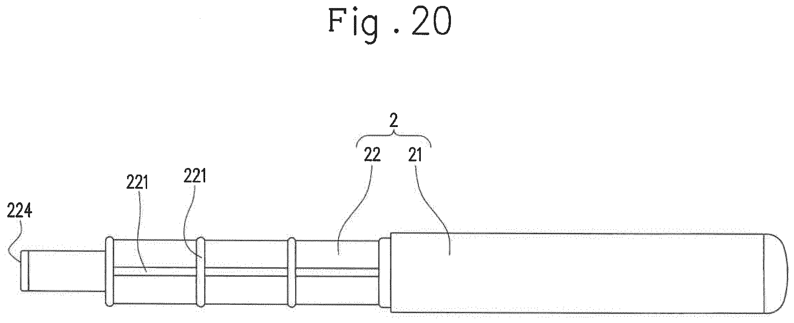

Note that a rear view of the cleaner body 2 is symmetrical with the front view (Fig. 19), and a bottom view thereof is symmetrical with the plan view (Fig. 20); thus, these drawings are not attached hereto. A left side view of the case 3 is identical to Fig. 10, a front view thereof is identical to Fig. 13, and a right side view thereof is symmetrical with the left side view (Fig. 10); thus, these drawings are not attached hereto. In Fig. 17 to Fig. 24, the parts or members in common with those of the aforementioned embodiment are given the same reference numbers.

Specifically, the cleaner body support 33 in this modified embodiment is the recess at the bottom portion of the case 3, and has the projecting portion 333 projecting from the substantial center toward the open end of the storage space 31S (upward). The projecting part 333 in this modified embodiment has a conical shape, without limitation thereto. For example, it can be a projection having various shapes such as a hemispherical shape or a polygonal pyramid shape.

The cleaner body 2 has stoppers 224 formed at its distal end to be radially symmetrical. A portion with a space between the stoppers 224 serves as the projection receiving part 225.

Similar to the aforementioned embodiment, the cleaner body support 33 in this modified embodiment comes into contact with the cleaner body 2 while being kept inclined thereto when the cleaner body 2 is stored in the case 3, so that the cleaner body 2 is guided to the supporting position at which the cleaner body 2 is stably stored. The distal end portion of the roll support 22 (stoppers 224) comes into contact with the inclined side surface of the projecting part 333 and is thereby guided downward of the projecting part 333 so that the roll support 22 is held in a stabilized state with the projecting part 333 being received by the projection receiving part 225, as shown in Fig. 17.

In the cleaner body 2 and the case 3, as described above, the shape of the portion contributing to guiding the cleaner body 2 when the cleaner body 2 is stored in the case 3 can be modified into various shapes.

The recess as the cleaner body support 33 in the aforementioned embodiment has the curved inner surface 331, without limitation thereto. The inner surface can be a flat inner surface (inclined surface).

The roll contacting projections 34 of the aforementioned embodiment are the ribs continuous in the vertical direction, without limitation thereto. The roll contacting projections 34 can have various forms, such as intermittent projections or ribs extending in the horizontal direction.

The configurations and operations of the aforementioned embodiment will be summarized below. The cleaner 1 of one aspect of the aforementioned embodiment includes: a case 3 having a storage space 31S partially open to the outside and an inner surface facing the storage space 31S; and a cleaner body 2 capable of being stored in the storage space 31S of the case 3 while supporting an adhesive tape roll R, wherein the cleaner body 2 includes a shaft-shaped roll support 22 configured to rotatably support the adhesive tape roll R, the case 3 includes a cleaner body support 33 configured to support the cleaner body 2 so that the cleaner body 2 in a stored state is inclined relative to a perpendicular direction, and the cleaner body 2 is supported by the cleaner body support 33 to be inclined so that a distance between a virtual axis L3 along a direction in which a front side inner surface 31F that is positioned on a front side of the inner surface of the case 3 extends and a virtual axis L2 passing through a center of the roll support 22 is large on a side away from the open side of the storage space 31S and small on a side close to the open side thereof.

According to this aspect, the cleaner body 2 is supported by the case 3 in such an inclined state so that the storage space 31S of the case 3 is large on the side away from the open side and small on the open side. This configuration can prevent the adhesive tape roll R from adhering to the front side inner surface 31F of the case 3.

The case 3 can include, on its rear side, a mounting part 32 capable of being mounted to a mounting object W, and while the mounting part 32 is kept mounted to the mounting object W, the supporting by the cleaner body support 33 is achieved so that the cleaner body 2 is inclined with its proximal end positioned more on a front side of the case 3 than its distal end.

According to this aspect, the cleaner body 2 is stored in the case 3 so as to be inclined forward. This configuration allows the user to easily take out the cleaner body 2.

An angle between the axis L3 in the front side inner surface 31F of the case 3 and the axis L2 in the roll support 22 can be 1 to 7 degrees.

An angle between the axis L3 in the front side inner surface 31F of the case 3 and the axis L2 in the roll support 22 can be 1 to 4 degrees.

According to these aspects, each angle as set above allows the cleaner body 2 to be more easily taken out of the case 3.

The configuration can be such that the cleaner body support 33 is provided at a portion away from the open side of the storage space 31S of the case 3, and restricts a distal end of the roll support 22 from moving at least forward and backward.

According to this aspect, the cleaner body support 33 restricts the distal end of the roll support 22 from moving forward and backward. As a result, the supporting angle of the cleaner body 2 is securely maintained.

The cleaner body support 33 comes into contact with a part of the cleaner body 2 while being kept inclined thereto when the cleaner body 2 is stored in the case 3, so that the cleaner body 2 can be guided to a supporting position.

According to this aspect, the cleaner body support 33 comes into contact with a part of the cleaner body 2 while being kept inclined thereto, which thereby causes the cleaner body 2 to generate a force to move itself to the supporting position.

The cleaner body support 33 can be a recess provided at a portion away from the open side of the storage space 31S of the case 3 and having a curved inner surface.

According to this aspect, the guiding is achieved by the distal end of the roll support 22, which comes into contact with the recess when the cleaner body 2 is to be stored.

The roll support 22 can include, at its distal end, a projection 222 configured to come into contact with the recess.

According to this aspect, the projection 222 of the roll support 22 comes into contact with the recess, and thereby the guiding can be more smoothly performed.

The configuration can be such that the recess has a through hole 332 substantially at its center, and the projection is fitted into the through hole 332 when in the stored state.

According to this aspect, the cleaner body 2 is stably supported.

A roll contacting projection 34 configured to come into contact with the adhesive tape roll R can be formed on the front side inner surface 31F of the case 3.

According to this aspect, the roll contacting projections 34 come into contact with the adhesive tape roll R when in the stored state. As a result, the adhesive force of the adhesive tape roll R is less likely to block the cleaner body 2 from being taken out.

According to the aforementioned embodiment, the adhesive tape roll R is prevented from adhering to the front side inner surface 31F of the case 3. As a result, the user can easily take the cleaner body 2 out of the case 3. Thus, the cleaner 1 with favorable usability can be provided.

### REFERENCE SIGNS LIST

1: Cleaner
2: Cleaner body
21: Handle
22: Roll support
222: Projection
3: Case
31: Storage part
31S: Storage space
31F: Front side inner surface of storage part
32: Mounting part
33: Cleaner body support
332: Through hole
34: Roll contacting projection
R: Adhesive tape roll
W: Mounting object
L2: Axis in roll support of cleaner body
L3: Axis in direction in which front side inner surface of case extends
θ: Angle between the axes

## Claims

1. A cleaner, comprising:
a case having a storage space partially open to the outside and an inner surface facing the storage space; and
a cleaner body capable of being stored in the storage space of the case while supporting an adhesive tape roll, wherein
the cleaner body comprises a shaft-shaped roll support configured to rotatably support the adhesive tape roll,
the case comprises a cleaner body support configured to support the cleaner body so that the cleaner body in a stored state is inclined relative to a perpendicular direction, and
the cleaner body is supported by the cleaner body support to be inclined so that a distance between a virtual axis along a direction in which a front side inner surface that is positioned on a front side of the inner surface of the case extends and a virtual axis passing through a center of the roll support is large on a side away from the open side of the storage space and small on a side close to the open side thereof.

2. The cleaner according to claim 1, wherein
the case comprises, on its rear side, a mounting part capable of being mounted to a mounting object, and
while the mounting part is kept mounted to the mounting object, the supporting by the cleaner body support is achieved so that the cleaner body is inclined with its proximal end positioned more on a front side of the case than its distal end.

3. The cleaner according to claim 1 or 2, wherein
an angle between the axis in the front side inner surface of the case and the axis in the roll support is 1 to 7 degrees.

4. The cleaner according to claim 1 or 2, wherein
an angle between the axis in the front side inner surface of the case and the axis in the roll support is 1 to 4 degrees.

5. The cleaner according to any one of claims 1 to 4, wherein
the cleaner body support is provided at a portion away from the open side of the storage space of the case, and restricts a distal end of the roll support from moving at least forward and backward.

6. The cleaner according to claim 5, wherein
the cleaner body support comes into contact with a part of the cleaner body while being kept inclined thereto when the cleaner body is stored in the case, so that the cleaner body is guided to a supporting position.

7. The cleaner according to claim 6, wherein
the cleaner body support is a recess provided at a portion away from the open side of the storage space of the case and having a curved inner surface.

8. The cleaner according to claim 7, wherein
the roll support comprises, at its distal end, a projection configured to come into contact with the recess.

9. The cleaner according to claim 8, wherein
the recess has a through hole substantially at its center, and the projection is fitted into the through hole when in the stored state.

10. The cleaner according to any one of claims 1 to 9, wherein
a roll contacting projection configured to come into contact with the adhesive tape roll is formed on the front side inner surface of the case.
